# EUROPEAN PATENT APPLICATION

(11) **EP 3 557 904 A1**
(43) Date of publication of application: **23.10.2019**
(21) Application number: 16925572.6
(22) Date of filing: 30.12.2016
(51) Int. Cl.: H04W 28/18

(54) **SERVICE DATA TRANSMISSION METHOD, NETWORK DEVICE, AND TERMINAL DEVICE**

(71) Applicant: Huawei Technologies Co., Ltd., Longgang District Shenzhen, Guangdong 518129 (CN)
(72) Inventor: XU, Leyuan, Shenzhen Guangdong 518129 (CN); SUN, Shaofeng, Shenzhen Guangdong 518129 (CN)
(74) Representative: Isarpatent
(86) International application number: PCT/CN2016/113478
(87) International publication number: WO 2018/120014

(57) **Abstract**

This application provides a service data transmission method, a network device, and a terminal device. The method includes: sending, by a network device, a first indication message to a terminal device, where the first indication message is used to indicate a second air interface parameter configuration, and the first indication message is sent by using an air interface resource with a first air interface parameter configuration; and performing, by the network device, service data transmission with the terminal device by using an air interface resource with the second air interface parameter configuration. According to the service data transmission method in this application, the network device sends, to the terminal device, an indication message that indicates an air interface parameter configuration, so that an air interface parameter configuration of an air interface resource used by the network device and the terminal device can be flexibly changed, thereby implementing better transmission and enhancing user experience.

## Description

### TECHNICAL FIELD

This application relates to the communications field, and more specifically, to a service data transmission method, a network device, and a terminal device.

### BACKGROUND

Currently, in a Long Term Evolution (Long Term Evolution, LTE) system, an air interface parameter configuration of an air interface ("air interface" for short) resource is unique, for example, a subcarrier spacing (subcarrier spacing), a cyclic prefix (Cyclic Prefix, CP) length, a transmission time interval (Transmission Time Interval, TTI), a symbol length or a quantity of symbols in the TTI, and a frame format. In other words, for all accessing users, a uniform air interface parameter configuration is used regardless of a service type.

In a 5th Generation Mobile Communication (5th Generation, 5G) system, services mainly relate to three fields, namely, an Enhanced Mobile Broadband (Enhanced Mobile Broadband, eMBB) service, an Ultra-Reliable and Low-Latency Communications (Ultra-Reliable and Low-Latency Communications, URLLC) service, and a Massive Machine-Type Communications (Massive Machine-Type Communications, mMTC) service. A service in a 5G network sometimes may have characteristics of a plurality of fields, for example, a low latency and ultra-reliable massive Internet of Things service or a low latency ultra-wideband service. Services in different fields have different requirements for an air interface resource in a wireless network. The existing uniform air interface parameter configuration of the air interface resource cannot meet requirements of coexistence of diversified services and achieving optimal performance.

### SUMMARY

This application provides a service data transmission method, a network device, and a terminal device, so that an air interface parameter configuration of an air interface resource can be flexibly changed, thereby implementing better transmission and enhancing user experience.

According to a first aspect, a service data transmission method is provided, including: sending, by a network device, a first indication message to a terminal device, where the first indication message is used to indicate a second air interface parameter configuration, and the first indication message is sent by using an air interface resource with a first air interface parameter configuration; and performing, by the network device, service data transmission with the terminal device by using an air interface resource with the second air interface parameter configuration.

According to the service data transmission method in the first aspect, the network device sends, to the terminal device, an indication message that indicates an air interface parameter configuration, so that an air interface parameter configuration of an air interface resource used by the network device and the terminal device can be flexibly changed, thereby implementing better transmission and enhancing user experience.

In a possible implementation of the first aspect, before the sending, by a network device, a first indication message to a terminal device, the method further includes: sending, by the network device, a second indication message to the terminal device, where the second indication message is used to indicate a first air interface parameter configuration set, and the first air interface parameter configuration set is a set of air interface parameter configurations that can be used when the network device performs service data transmission; and receiving, by the network device, a third indication message sent by the terminal device, where the third indication message is used to indicate a second air interface parameter configuration set, and the second air interface parameter configuration set is a set of air interface parameter configurations that can be used when the terminal device performs service data transmission; and the second air interface parameter configuration is one in an intersection set of the first air interface parameter configuration set and the second air interface parameter configuration set. In this implementation, both the network device and the terminal device learn of the air interface parameter configurations supported by each other, which helps the network device more efficiently select an appropriate air interface parameter configuration from the air interface parameter configurations.

In a possible implementation of the first aspect, before the sending, by a network device, a first indication message to a terminal device, the method further includes: receiving, by the network device, a service data transmission indicator sent by a core network device; and determining, by the network device, the second air interface parameter configuration based on the transmission indicator. In this implementation, the network device selects an appropriate air interface parameter configuration based on a requirement of the core network device for the transmission indicator.

In a possible implementation of the first aspect, before the sending, by a network device, a first indication message to a terminal device, the method further includes: receiving, by the network device, a request message sent by the terminal device, where the request message is used to request the network device to send the first indication message to the terminal device.

In a possible implementation of the first aspect, the sending, by a network device, a first indication message to a terminal device includes: sending, by the network device, the first indication message to the terminal device in a multicast or broadcast manner. In this implementation, the first indication message is an RRC reconfiguration message, and the network device may send the RRC reconfiguration message to the terminal device in a multicast manner.

In a possible implementation of the first aspect, before the performing, by the network device, service data transmission with the terminal device by using the air interface resource with the second air interface parameter configuration, the method further includes: receiving, by the network device, an acknowledgement message sent by the terminal device, where the acknowledgement message is used to indicate that the terminal device determines to use the air interface resource with the second air interface parameter configuration to perform service data transmission with the network device.

According to a second aspect, a service data transmission method is provided, including: receiving, by a terminal device, a first indication message sent by a network device, where the first indication message is used to indicate a second air interface parameter configuration, and the first indication message is sent by using an air interface resource with a first air interface parameter configuration; and performing, by the terminal device, service data transmission with the network device by using an air interface resource with the second air interface parameter configuration.

In a possible implementation of the second aspect, before the receiving, by a terminal device, a first indication message sent by a network device, the method further includes: receiving, by the terminal device, a second indication message sent by the network device, where the second indication message is used to indicate a first air interface parameter configuration set, and the first air interface parameter configuration set is a set of air interface parameter configurations that can be used when the network device performs service data transmission; and sending, by the terminal device, a third indication message to the network device, where the third indication message is used to indicate a second air interface parameter configuration set, and the second air interface parameter configuration set is a set of air interface parameter configurations that can be used when the terminal device performs service data transmission; and the second air interface parameter configuration is one in an intersection set of the first air interface parameter configuration set and the second air interface parameter configuration set.

In a possible implementation of the second aspect, before the receiving, by a terminal device, a first indication message sent by a network device, the method further includes: sending, by the terminal device, a request message to the network device, where the request message is used to request the network device to send the first indication message to the terminal device.

In a possible implementation of the second aspect, the receiving, by a terminal device, a first indication message sent by a network device includes: receiving, by the terminal device, the first indication message sent by the network device in a multicast or broadcast manner.

In a possible implementation of the second aspect, before the performing, by the terminal device, service data transmission with the network device by using the air interface resource with the second air interface parameter configuration, the method further includes: sending, by the terminal device, an acknowledgement message to the network device, where the acknowledgement message is used to indicate that the terminal device determines to use the air interface resource with the second air interface parameter configuration to perform service data transmission with the network device.

In the first aspect and the second aspect, the second air interface parameter configuration may include at least one of a subcarrier spacing, a cyclic prefix CP length, a length of a transmission time interval TTI, a symbol length or a quantity of symbols in the TTI, and a frame format.

According to a third aspect, a network device is provided, including a module that performs the method in the first aspect or any possible implementation of the first aspect.

According to a fourth aspect, a network device is provided, including a processor, a memory, and a transceiver, to perform the method in the first aspect or any possible implementation of the first aspect.

According to a fifth aspect, a terminal device is provided, including a module that performs the method in the second aspect or any possible implementation of the second aspect.

According to a sixth aspect, a terminal device is provided, including a processor, a memory, and a transceiver, to perform the method in the second aspect or any possible implementation of the second aspect.

According to a seventh aspect, a computer readable medium is provided, and is configured to store a computer program. The computer program includes an instruction that is used to perform the method in the first aspect or any possible implementation of the first aspect.

According to an eighth aspect, a computer readable medium is provided, and is configured to store a computer program. The computer program includes an instruction that is used to perform the method in the second aspect or any possible implementation of the second aspect.

### BRIEF DESCRIPTION OF DRAWINGS

FIG. 1 is a schematic diagram of an air interface slicing technology;
FIG. 2 is a schematic diagram of a parameter configuration of an air interface resource in frequency domain;
FIG. 3 is a schematic architectural diagram of a communications system to which an embodiment of the present invention is applied;
FIG. 4 is a schematic flowchart of a service data transmission method according to an embodiment of the present invention;
FIG. 5 is a schematic diagram of a physical layer during communication between a network device and a terminal device according to an embodiment of the present invention;
FIG. 6 is a schematic block diagram of a network device according to an embodiment of the present invention;
FIG. 7 is a schematic block diagram of a network device according to another embodiment of the present invention;
FIG. 8 is a schematic block diagram of a terminal device according to an embodiment of the present invention; and
FIG. 9 is a schematic block diagram of a terminal device according to another embodiment of the present invention.

### DESCRIPTION OF EMBODIMENTS

The following describes the embodiments of the present invention with reference to accompanying drawings.

It should be understood that, technical solutions in this application may be applied to various communications systems, such as: an LTE system, an LTE Frequency Division Duplex (Frequency Division Duplex, FDD) system, an LTE Time Division Duplex (Time Division Duplex, TDD) system, a Universal Mobile Telecommunications System (Universal Mobile Telecommunications System, UMTS), a Worldwide Interoperability for Microwave Access (Worldwide Interoperability for Microwave Access, WiMAX) communications system, a Public Land Mobile Network (Public Land Mobile Network, PLMN) system, a device to device (Device to Device, D2D) network system or a machine to machine (Machine to Machine, M2M) network system, and a future 5G communications system.

It should be understood that in the embodiments of the present invention, a terminal device may also be referred to as user equipment (User Equipment, UE), a mobile station (Mobile Station, MS), a mobile terminal (mobile terminal), and the like. The terminal device may communicate with one or more core network devices by using a radio access network (Radio Access Network, RAN). For example, the terminal device may be a mobile phone (or referred to as a "cellular" phone) or a computer having a communication function; for example, the terminal device may also be a portable mobile apparatus, a pocket-sized mobile apparatus, a handheld mobile apparatus, a computer built-in mobile apparatus, or an in-vehicle mobile apparatus.

It should be further understood that a network device may be a device configured to communicate with the terminal device, and the network device may be an evolved NodeB (evolved NodeB, eNB or eNodeB) or an access point in an LTE system, or an in-vehicle device, a wearable device, a network device in a future 5G network, or a network device in a further evolved Public Land Mobile Network (Public Land Mobile Network, PLMN). For ease of description, the following uses the eNB in the LTE system as an example for description.

An air interface resource is usually in three dimensions: time domain, frequency domain, and space domain. The embodiments of the present invention focus mainly on two dimensions of the air interface resource: time domain and frequency domain. The air interface resource is usually represented by a resource element (Resource Element, RE), a resource block (Resource Block, RB), a symbol (symbol), a subcarrier (subcarrier), or a TTI. The air interface resources may be divided from perspectives of time domain and frequency domain. A minimum resource granularity of frequency-domain division is a subcarrier, and a minimum resource granularity of time-domain division is a symbol. One RE represents a resource that is within one symbol and that is corresponding to one subcarrier. Each RE may carry information. N symbols form one TTI in time. M subcarriers within one TTI combine to form one RB.

An air interface parameter configuration of the air interface resource may also be referred to as a "numerology", and may be at least one of a subcarrier spacing, a CP length, a length of a TTI, a symbol length or a quantity of symbols in the TTI, a frame format, and the like. Any parameter that can reflect a characteristic of the air interface resource can be content of the numerology. The embodiments of the present invention are not limited thereto.

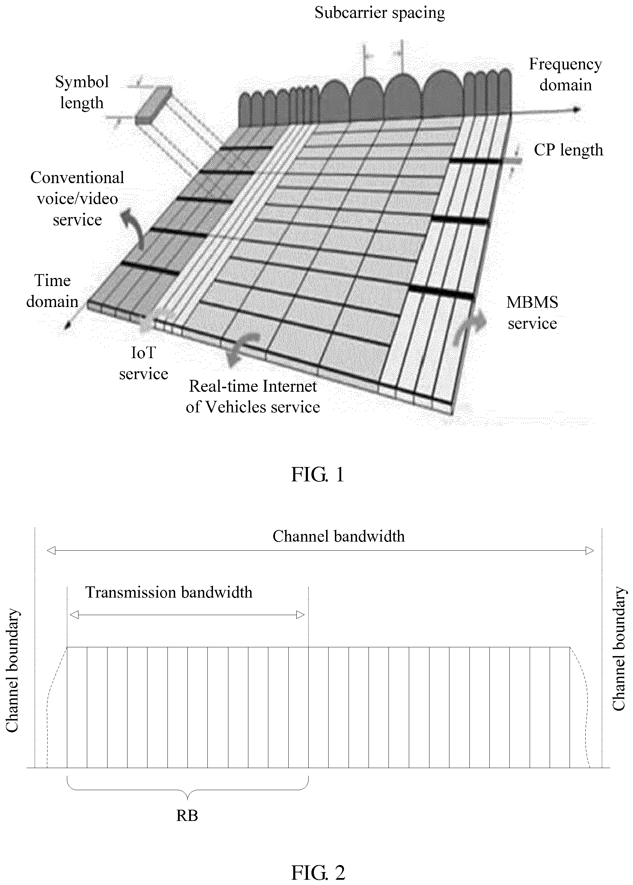

FIG. 1 is a schematic diagram of an air interface slicing technology. As shown in FIG. 1, the air interface slicing technology may be applied to an FDD system or a TDD system. The air interface slicing technology means that air interface resources on contiguous spectra are logically abstracted as one or more mutually isolated air interface slices. Each air interface slice includes a series of logical air interface functions. Each air interface slice has a specific subcarrier spacing, a specific TTI, a specific symbol length or a specific quantity of symbols in the TTI, a specific CP length, and the like. Air interface slices with different parameter configurations can meet differentiated requirements of different service types.

For example, as shown in FIG. 1, different air interface slices can meet a conventional voice/video service, an Internet of Things (Internet of Things, IoT) service, a real-time Internet of Vehicles service, a Multimedia Broadcast Multicast Service (Multimedia Broadcast Multicast Service, MBMS), and the like. It can be easily learned that an air interface slice of the IoT service has a narrow subcarrier spacing and a relatively large transmission latency, which are important for densely distributed low-power IoT devices, whereas a subband configuration of the real-time Internet of Vehicles service has a maximum subcarrier bandwidth and a minimum transmission latency. In an air interface technology in 5th Generation Mobile Communication, air interface slicing is an on-demand networking manner, and brings an operator a new service that can be adjusted based on a continuously changing user requirement and quickly meet a new-type application requirement. Such an air interface slicing technology allows the operator to provide an air interface resource as a service to a user, and freely combine air interface resources based on indicators such as a rate, a capacity, coverage, latency, reliability, security, and availability, so as to meet requirements of different users.

In the prior art, an air interface parameter configuration of an air interface resource corresponding to an air interface slice is fixed. FIG. 2 is a schematic diagram of a parameter configuration of an air interface resource in frequency domain. As shown in FIG. 2, on a channel, a channel bandwidth determines upper and lower limits of frequencies allowed to pass through the channel. In other words, a frequency passband is specified. In the channel, all parameters such as a quantity of subcarriers included in one RB, a subcarrier spacing, and a transmission bandwidth determined by the quantity of subcarriers and the subcarrier spacing are fixed. For all accessing users, a unified specification is used regardless of a service type.

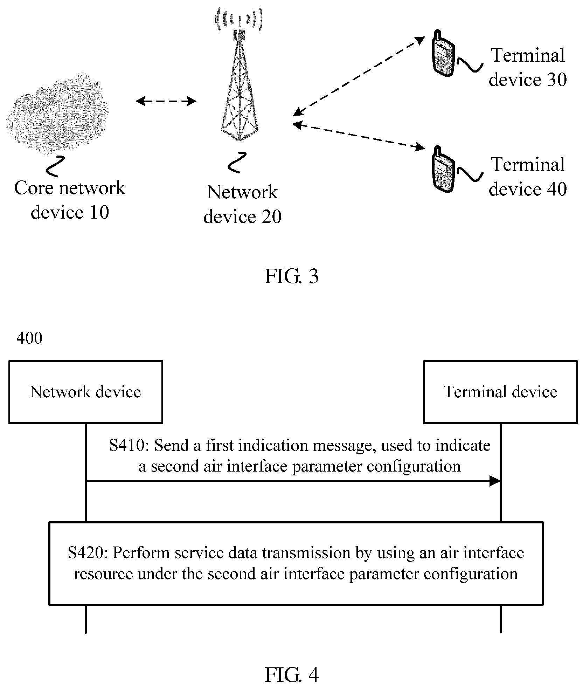

FIG. 3 is a schematic architectural diagram of a communications system to which an embodiment of the present invention is applied. As shown in FIG. 3, the communications system includes a core network device 10, a network device 20, a terminal device 30, and a terminal device 40, which are connected in a wireless manner, a wired manner, or another manner. The terminal device 30 and the terminal device 40 may be stationary or mobile. For example, in an existing solution, when performing service data transmission, the network device 20 and the terminal device 30 use a preconfigured air interface resource that has a fixed parameter configuration. In other words, the network device 20 and the terminal device 30 perform service data transmission by using a fixed subcarrier spacing, a fixed cyclic prefix length, a fixed transmission time interval, a fixed frame format, and the like. FIG. 3 is only an example of a simplified schematic diagram. The system may further include another network device and/or another terminal device, which are/is not shown in FIG. 3.

FIG. 4 is a schematic flowchart of a service data transmission method 400 according to an embodiment of the present invention. As shown in FIG. 4, the method 400 may include the following steps.

S410: A network device sends a first indication message to a terminal device, where the first indication message is used to indicate a second air interface parameter configuration, and the first indication message is sent by using an air interface resource with a first air interface parameter configuration; and correspondingly, the terminal device receives the first indication message sent by the network device.

S420: The network device performs service data transmission with the terminal device by using an air interface resource with the second air interface parameter configuration. Correspondingly, the terminal device performs service data transmission with the network device by using an air interface resource with the second air interface parameter configuration.

According to the service data transmission method in this embodiment of the present invention, the network device sends, to the terminal device, an indication message that indicates an air interface parameter configuration, so that an air interface parameter configuration of an air interface resource used by the network device and the terminal device can be flexibly changed, thereby implementing better transmission and enhancing user experience.

Specifically, the network device and the terminal device currently perform service data transmission on the air interface resource with the first air interface parameter configuration. When a service requirement of the terminal device changes, or a requirement of a system for a service data transmission indicator changes, the network device and the terminal device need to change the air interface parameter configuration of the air interface resource (for example, change to the second air interface parameter configuration), to adapt to a service requirement change or a transmission indicator change, and then perform service data transmission. The network device sends the first indication message to the terminal device, to indicate the new air interface parameter configuration. The network device and the terminal device may start, according to a protocol or a convention of higher layer signaling or according to time information in the first indication message (the first indication message may further include time information used to indicate a moment at which an air interface parameter configuration is changed), to use the second air interface parameter configuration to continue transmission of original service data or transmit new service data on the air interface resource at a subsequent moment or in a subsequent subframe.

In other words, a current air interface parameter configuration of an air interface resource in this embodiment of the present invention is the first air interface parameter configuration (or referred to as a first numerology), and the network device and the terminal device perform communication on the air interface resource whose parameter configuration is the first numerology; and when a service requirement changes, or a requirement of a system for a service data transmission indicator changes, the network device changes the parameter configuration of the air interface resource to the second air interface parameter configuration (or referred to as a second numerology), and then the network device and the terminal device perform communication on an air interface resource whose parameter configuration is the second numerology.

The first indication message may be sent in a plurality of manners. For example, the network device may send the first indication information in a manner of sending a radio resource control (Radio Resource Control, RRC) reconfiguration message to the terminal device, that is, the first indication message may be the RRC reconfiguration message. Alternatively, the network device may send the first indication information in a manner of sending downlink control information (Downlink Control Information, DCI), that is, the first indication message may be a physical downlink control channel (Physical Downlink Control Channel, PDCCH). Certainly, the first indication message may alternatively be sent in another manner. This embodiment of the present invention is not limited thereto.

In this embodiment of the present invention, the network device may send the first indication message to the terminal device in a unicast, broadcast, or multicast manner. The multicast manner is used as an example. If the network device determines that all of the terminal device in this embodiment of the present invention and one or more other terminal devices need to use the second air interface parameter configuration for service data transmission, the network device may send, in the multicast manner, the first indication message to a terminal device set formed by these terminal devices.

It should be understood that the first indication message may directly indicate a parameter of an air interface parameter configuration, or may indicate an air interface parameter configuration (a numerology) by using an identifier or an index. The first indication message may include only a parameter that needs to be changed, or may include entire content of the numerology. This embodiment of the present invention is not limited thereto.

In a specific example, because each numerology is corresponding to an identifier in an existing communication protocol, the first indication message generated by the network device includes an identifier corresponding to the second air interface parameter configuration. After receiving the first indication message, the terminal device parses out the identifier, and determines, according to a provision in the protocol, the second air interface parameter configuration that is to be used for service data transmission.

As the service requirement of the terminal device changes, a numerology of an air interface resource may have a corresponding change rule. The following uses several specific examples for description.

When a moving speed of the terminal device changes, for example, changing from low-speed moving to high-speed moving, a subcarrier spacing of a spectrum resource used by the terminal device may be increased to cope with a Doppler shift and phase noise brought by a high moving speed.

When a distance between the terminal device and the network device changes, for example, in a wide coverage scenario, when the terminal device is farther away from the network device and there is no neighboring network device to which the terminal device can be handed over, a CP length of a spectrum resource used by the terminal device may be increased to adapt to a coverage change.

When a bandwidth requirement of the terminal device changes, a subcarrier spacing and a TTI length that are of the user may be appropriately adjusted.

When the terminal device has a special quality of service (Quality of Service, QoS) requirement, for example, when the terminal device requires a relatively low latency, a TTI length and the like that are of the terminal device may be reduced to reduce a latency.

In an Internet of Things scenario, because there is a large quantity of terminal devices in a network, and the terminal devices require a relatively low bandwidth, a subcarrier spacing and a TTI length that are of a spectrum resource used by the terminal device may be adjusted. For example, a smaller subcarrier spacing and a longer TTI may be used to accommodate data of more terminal devices that have a relatively small amount of data and that are insensitive to a latency.

In a hybrid scenario, the terminal device needs to perform data transmission simultaneously for a downlink eMBB service and an uplink URLLC service. For a service requirement of the terminal device, a downlink subcarrier spacing and an uplink TTI length that are of the terminal device may be adjusted, so as to meet different requirements of both the uplink and downlink services of the terminal device.

It should be understood that the foregoing enumerated several change rules of the numerology of the air interface resource are only several of a plurality of change rules, the numerology may further have a plurality of other change forms, and each numerology may be obtained through superposition performed on the foregoing one or more change rules. The embodiments of the present invention are not limited thereto.

For any two numerologies of a plurality of numerologies, one parameter or a plurality of parameters may change. In this embodiment of the present invention, the first air interface parameter configuration is recorded as a numerology 1, and the second air interface parameter configuration is recorded as a numerology 2.

A change of the moving speed of the terminal device and a change of the distance between the terminal device and the network device in the foregoing are used as an example. The numerology 1 is a numerology used by the terminal device and the network device during service data transmission when the moving speed of the terminal device is 10 meters per second and the distance between the terminal device and the network device is 100 meters. A subcarrier spacing of the numerology 1 may be 7.5 kHz. The numerology 2 is a numerology used by the terminal device and the network device during service data transmission when the moving speed of the terminal device is 20 meters per second and the distance between the terminal device and the network device is 100 meters. A subcarrier spacing of the numerology 2 is 10 kHz. All of other parameters of the numerology 1 and the numerology 2 do not change. A numerology 3 is a numerology used by the terminal device and the network device during service data transmission when the moving speed of the terminal device is 20 meters per second and the distance between the terminal device and the network device is 200 meters. A subcarrier spacing of the numerology 3 is 10 kHz, and a CP length increases from an original standard length to 5.21 µs. It can be learned that when the numerology 2 is compared with the numerology 1, only the subcarrier spacing changes, and when the numerology 3 is compared with the numerology 1, both the subcarrier spacing and the CP length change.

In this embodiment of the present invention, whether the service requirement of the terminal device changes may be monitored and determined in a plurality of manners.

Optionally, in an embodiment, the network device may proactively monitor the service requirement change of the terminal device. For example, the network device may periodically monitor the terminal device, that is, the network device is set to monitor the service requirement of the terminal device at regular intervals. For another example, the network device may alternatively monitor the terminal device at a scheduled time. For example, the network device is set to monitor the service requirement of the terminal device at 6:00, 12:00, 15:00, and 20:00 every day. When determining that the service requirement of the terminal device changes, for example, when the service requirement changes due to a change in information such as a motion status, the network device schedules a new numerology for the terminal device, generates the first indication message, and sends the first indication message to the terminal device, indicating that the parameter configuration of the air interface resource is to be changed to the new numerology.

Optionally, in another embodiment, in the communications system shown in FIG. 3, the core network device may send one or more instructions to the network device through an S1 interface. The instruction may include a service data transmission indicator, for example, at least one of a bandwidth, an RB location, a guaranteed bit rate (Guaranteed Bit Rate, GBR), a QoS indicator, and other information. These indicators may represent characteristics of a numerology that the core network device expects the network device to use. After receiving the instruction, the network device may configure a numerology based on these indicators, to meet a core network transmission indicator. In summary, before the network device sends the first indication message to the terminal device in S410, the method 400 may further include: receiving, by the network device, a service data transmission indicator sent by a core network device; and determining, by the network device, the second air interface parameter configuration based on the transmission indicator.

Specifically, after receiving the instruction sent by the core network device, the network device may determine a scheduling method based on the transmission indicator in the instruction, so as to select, according to a scheduling algorithm, a numerology matching the service requirement. In an LTE system, several scheduling algorithms that may be used include: a round robin (Round Robin, RR) policy, a maximum carrier-to-interference ratio (MAX C/I) policy, a proportional fair (Proportional Fair, PF) policy, a Modified Largest Weighted Delay First (Modified Largest Weighted Delay First, M-LWDF) policy, an earliest deadline first (Earliest Deadline First, EDF) policy, and the like.

A basic idea of the RR policy is to ensure that users in a cell cyclically occupy, in a determined order, radio resources available within an equal amount of time. Each user uses a cache queue to buffer to-be-transmitted data. When being scheduled, a non-empty queue accepts service in a round robin manner for data transmission. This algorithm can ensure not only long-term fairness but also short-term fairness between users, but system throughput is excessively low.

A basic idea of the MAX C/I policy is to sort all to-be-served mobile stations by predicted C/I values of received signals of the mobile stations, and perform sending in descending order of predicted C/I values. A user with a high C/I has a high resource allocation priority. This algorithm can help obtain excessively high system throughput but cause relatively poor fairness.

According to the PF policy, each user in a cell is allocated with a corresponding priority, and a user with a highest priority in the cell accepts service. When the user performs continuous communication, a transmission rate increases gradually, and the priority of the user decreases. As a result, the user cannot obtain a service any longer. This ensures that a user with best channel quality in the cell cannot always occupy resources exclusively, thereby improving fairness. In addition, due to service time selection, a user obtains a service only in a case of relatively satisfactory fast fading. Therefore, system throughput is increased. However, this policy does not consider QoS requirements of different services, especially a latency requirement.

A main idea of the M-LWDF policy is to balance a data packet latency with how to effectively utilize channel information. User priority calculation of the M-LWDF policy is not only related to current channel quality of a user, but also related to a queue latency of a packet. This algorithm provides better QoS for cell throughput, but usually causes a latency of two to three seconds. However, for a user in a poor channel condition, this algorithm causes a relatively large latency to a data packet of the user on a network device side. When the latency exceeds a maximum tolerance time of the user, the data packet is discarded.

According to the EDF policy, each task in a ready queue is allocated with a priority based on a deadline of the task, and a task with an earliest deadline has a highest priority. This algorithm does not consider system throughput or fairness between different users.

For example, if there is a relatively low requirement for QoS indicator assurance in the instruction, the PF policy or the MAX C/I policy may be used for numerology scheduling; and if there is a relatively low requirement for system throughput in the instruction, the RR policy or the EDF policy may be used for numerology scheduling. It should be understood that the foregoing scheduling method is only an example, and is not a limitation on this embodiment of the present invention.

Optionally, in another embodiment, when the terminal device needs to use a new numerology to transmit service data due to a service requirement change, the terminal device may send a request message to the network device. The request message is used to request the network device to allocate an appropriate numerology to the terminal device, so that the terminal device adapts to the service requirement change. After receiving the request message, the network device monitors and determines the service requirement change of the terminal device, and generates the first indication message. In summary, before that the network device sends the first indication message to the terminal device in S410, the method 400 may further include: receiving, by the network device, a request message sent by the terminal device, where the request message is used to request the network device to send the first indication message to the terminal device.

Optionally, in this embodiment of the present invention, before the network device performs service data transmission with the terminal device by using an air interface resource with the second air interface parameter configuration in S420, the method 400 may further include: receiving, by the network device, an acknowledgement message sent by the terminal device, where the acknowledgement message is used to indicate that the terminal device determines to use the air interface resource with the second air interface parameter configuration to perform service data transmission with the network device. Specifically, before performing service data transmission, the terminal device needs to confirm with the network device, that is, two parities need to reach an agreement through negotiation.

In this embodiment of the present invention, before the network device sends the first indication message to the terminal device in S410, the method 400 may further include: sending, by the network device, a second indication message to the terminal device, where the second indication message is used to indicate a first air interface parameter configuration set, and the first air interface parameter configuration set is a set of air interface parameter configurations that can be used when the network device performs service data transmission; and receiving, by the network device, a third indication message sent by the terminal device, where the third indication message is used to indicate a second air interface parameter configuration set, the second air interface parameter configuration set is a set of air interface parameter configurations that can be used when the terminal device performs service data transmission, and the second air interface parameter configuration is one in an intersection set of the first air interface parameter configuration set and the second air interface parameter configuration set. In this embodiment of the present invention, both the network device and the terminal device learn of the air interface parameter configurations supported by each other, which helps the network device more efficiently select an appropriate air interface parameter configuration from the air interface parameter configurations.

Specifically, after the terminal device enters an area covered by the network device, on the one hand, the network device sends the second indication message to the terminal device. Specifically, the network device may send, in a unicast, multicast, or broadcast manner, the first air interface parameter configuration set to all terminal devices within the coverage area including the terminal device in this embodiment of the present invention, to notify all the terminal devices within the coverage area of a set of numerologies that can be used by the network device.

It should be understood that the network device may send the second indication message to the terminal device in a plurality of manners. For example, the network device may send the second indication message to the terminal device proactively after the terminal device accesses a network. Alternatively, before the terminal device and the network device need to perform service data transmission, the terminal device may send a request message to the network device, to request the network device to send the second indication message to the terminal device. This embodiment of the present invention is not limited to a specific manner of sending the second indication message by the network device.

On the other hand, the network device receives the third indication message sent by the terminal device. Specifically, the terminal device may send the second air interface parameter configuration set to the network device in a plurality of manners, to notify the network device of a set of numerologies that can be used by the terminal device. For example, the terminal device sends the third indication message to the network device immediately after entering the area covered by the network device. Alternatively, when the network device and the terminal device need to perform service data transmission, the network device may send a request message to the terminal device, to request the terminal device to send the third indication message to the network device. This embodiment of the present invention is not limited to a specific manner of sending the third indication message by the terminal device.

It should be further understood that the second indication message may directly include each air interface parameter configuration in the first air interface parameter configuration set, or may include an index or identifier of each air interface parameter configuration in the first air interface parameter configuration set. This is also applicable to content in the third indication message. This embodiment of the present invention is not limited thereto.

In this embodiment of the present invention, the second air interface parameter configuration, that is, a to-be-changed-to air interface parameter configuration, needs to be an air interface parameter configuration in the intersection set of the first air interface parameter configuration set and the second air interface parameter configuration set. In other words, both the network device and the terminal device need to support the second air interface parameter configuration. If the network device cannot determine an air interface parameter configuration from the intersection set of the two through calculation, or a determined air interface parameter configuration does not belong to the intersection set of the two, the network device does not send the first indication message to the terminal device. In other words, the network device and the terminal device still use the original air interface parameter configuration for service data transmission.

It should be understood that the air interface parameter configurations that can be used by the network device may be preconfigured by the core network device. For example, the core network device may send 100 air interface parameter configuration instructions to the network device, to indicate 100 different numerologies that can be supported by the network device.

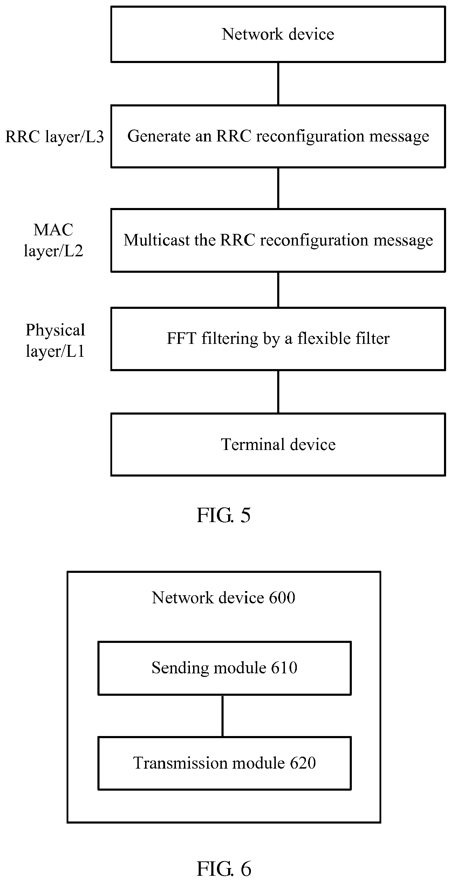

It is mentioned in the foregoing that the first indication message may be the RRC reconfiguration message. The following provides a detailed description with reference to FIG. 5. FIG. 5 is a schematic diagram of a physical layer during communication between a network device and a terminal device according to an embodiment of the present invention. As shown in FIG. 5, when determining that the terminal device needs to use the new numerology for service data transmission, the network device generates the first indication message at an RRC layer (that is, an L3 layer) between the network device and the terminal device, that is, the RRC reconfiguration message. The network device may send the RRC reconfiguration message to the terminal device in a multicast manner at a Media Access Control (Media Access Control, MAC) layer (that is, an L2 layer). In addition to indicating the new numerology, the RRC reconfiguration message may further indicate information such as a bandwidth of an air interface resource, an RB location, a multiple-input multiple-output (Multiple-Input Multiple-Output, MIMO) mode, a physical broadcast channel (Physical Broadcast Channel, PBCH), a sounding reference signal (Sounding Reference Signal, SRS) resource, and MIMO. After the terminal device receives the RRC reconfiguration message, the network device immediately configures an air interface resource for the terminal device at the MAC layer. A flexible filter is disposed at the physical layer (that is, an L1 layer) to perform fast Fourier transformation (Fast Fourier Transformation, FFT) filtering on a signal, so as to eliminate mutual interference between subcarriers and improve spectral efficiency.

The following uses an example to describe an RRC reconfiguration process. When the terminal device moves from the coverage area of the current network device to a coverage area of another network device, for example, when the terminal device moves into a cell of the another network device, a handover between the network devices needs to be performed. Before triggering a handover process, the network device may instruct the terminal device to perform measurement reporting or may directly perform a blind handover. Before the source network device sends a handover message to the terminal device, the target network device prepares one or more target cells. The target network device generates a handover message and sends the handover message to the source network device through an X2 interface. Then, the source network device transparently forwards the handover message to the terminal device. When appropriate, the source network device may forward a user data bearer to the target network device. After receiving the handover message, the terminal device attempts to initiate a random access procedure by selecting a random access resource at a first available random access opportunity. In other words, a handover is asynchronous. Therefore, when a target cell is allocating a dedicated preamble to the terminal device, a network needs to ensure that the terminal device is available in a first available random access scenario. After completing the handover, the terminal device sends a handover complete message to the network device to confirm that the handover is successful.

If the target network device does not support an RRC protocol version configured by the source network device for the terminal device, the target network device may be unable to understand a configuration provided by the source network device for the terminal device. In this case, the target network device needs to provide a full configuration for the terminal device to complete the handover and RRC re-establishment. The full configuration includes initialization of a radio configuration. The radio configuration and a configuration used by the source network device are mutually independent. In other words, the new full configuration overwrites the original configuration of the source network device on a terminal device side, except for a security algorithm.

On a source network device side, a context of the terminal device is sometimes retained, so that the terminal device can return to an original configuration when the handover fails. After monitoring a handover failure, the terminal device attempts to initiate an RRC re-establishment procedure in a source cell or another cell for RRC connection restoration. This access can be successful only when a cell in which the source network device or another network device that is ready for a handover is located is ready.

A normal measurement and movement process is also used to support a handover to a cell to which a closed subscriber group identity (Closed Subscriber Group Identity, CSG ID) is broadcast. In addition, a network may also configure the terminal device to report a neighboring CSG cell that is included in a CSG whitelist of the terminal device and that the terminal device is entering or leaving; and a network may also require that the terminal device report measured related information of a to-be-handed-over-to cell selected, such as a CSG ID.

It should be understood that sequence numbers of the foregoing processes do not mean an execution order in the embodiments of the present invention. The execution order of the processes should be determined based on functions and internal logic of the processes, and should not be construed as any limitation on the implementation processes of this embodiment of the present invention.

The foregoing describes in detail the service data transmission method according to the embodiments of the present invention. The following describes the network device and the terminal device according to the embodiments of the present invention. It should be understood that the network device and the terminal device in the embodiments of the present invention may perform the methods in the foregoing embodiments of the present invention, that is, for specific working processes of the following devices, reference may be made to corresponding processes in the foregoing method embodiments.

FIG. 6 is a schematic block diagram of a network device 600 according to an embodiment of the present invention. As shown in FIG. 6, the network device 600 includes:
a sending module 610, configured to send a first indication message to a terminal device, where the first indication message is used to indicate a second air interface parameter configuration, and the first indication message is sent by using an air interface resource with a first air interface parameter configuration; and
a transmission module 620, configured to perform service data transmission with the terminal device by using an air interface resource with the second air interface parameter configuration sent by the sending module 610.

The network device in this embodiment of the present invention sends, to the terminal device, an indication message that indicates an air interface parameter configuration, so that an air interface parameter configuration of an air interface resource used by the network device and the terminal device can be flexibly changed, thereby implementing better transmission and enhancing user experience.

Optionally, in an embodiment, the sending module 610 is further configured to: before sending the first indication message to the terminal device, send a second indication message to the terminal device, where the second indication message is used to indicate a first air interface parameter configuration set, and the first air interface parameter configuration set is a set of air interface parameter configurations that can be used when the network device 600 performs service data transmission; and the network device 600 further includes a receiving module, configured to receive a third indication message sent by the terminal device, where the third indication message is used to indicate a second air interface parameter configuration set, and the second air interface parameter configuration set is a set of air interface parameter configurations that can be used when the terminal device performs service data transmission; and the second air interface parameter configuration is one in an intersection set of the first air interface parameter configuration set and the second air interface parameter configuration set.

Optionally, in an embodiment, the network device 600 further includes the receiving module, configured to: before the sending module 610 sends the first indication message to the terminal device, receive a service data transmission indicator sent by a core network device; and the network device 600 further includes a processing module, configured to determine the second air interface parameter configuration based on the transmission indicator.

Optionally, in an embodiment, the network device 600 further includes the receiving module, configured to: before the sending module 610 sends the first indication message to the terminal device, receive a request message sent by the terminal device, where the request message is used to request the network device 600 to send the first indication message to the terminal device.

Optionally, in an embodiment, the sending module 610 is specifically configured to send the first indication message to the terminal device in a multicast or broadcast manner.

Optionally, in an embodiment, the network device 600 further includes the receiving module, configured to: before the transmission module 620 performs service data transmission with the terminal device by using the air interface resource with the second air interface parameter configuration, receive an acknowledgement message sent by the terminal device, where the acknowledgement message is used to indicate that the terminal device determines to use the air interface resource with the second air interface parameter configuration to perform service data transmission with the network device 600.

Optionally, in an embodiment, the second air interface parameter configuration includes at least one of a subcarrier spacing, a cyclic prefix CP length, a length of a transmission time interval TTI, a symbol length or a quantity of symbols in the TTI, and a frame format.

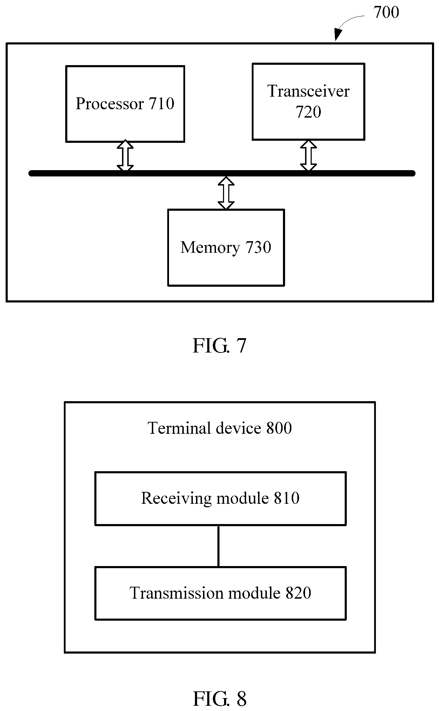

It should be noted that in this embodiment of the present invention, the sending module 610, the transmission module 620, and the receiving module may be implemented by a transceiver, and the processing module may be implemented by a processor. As shown in FIG. 7, a network device 700 may include a processor 710, a transceiver 720, and a memory 730. The memory 730 may be configured to store code to be executed by the processor 710, or the like.

Components in the network device 700 communicate with each other by using an internal connection channel, to transfer a control signal and/or a data signal.

The network device 700 shown in FIG. 7 or the network device 600 shown in FIG. 6 can implement each process implemented in the foregoing method embodiments. To avoid repetition, details are not described herein again.

FIG. 8 is a schematic block diagram of a terminal device 800 according to an embodiment of the present invention. As shown in FIG. 8, the terminal device 800 includes:
a receiving module 810, configured to receive a first indication message sent by a network device, where the first indication message is used to indicate a second air interface parameter configuration, and the first indication message is sent by using an air interface resource with a first air interface parameter configuration; and
a transmission module 820, configured to perform service data transmission with the network device by using an air interface resource with the second air interface parameter configuration received by the receiving module 810.

The terminal device in this embodiment of the present invention receives an indication message that indicates an air interface parameter configuration and that is sent by the network device, so that an air interface parameter configuration of an air interface resource used by the network device and the terminal device can be flexibly changed, thereby implementing better transmission and enhancing user experience.

Optionally, in an embodiment, the receiving module 810 is further configured to: before receiving the first indication message sent by the network device, receive a second indication message sent by the network device, where the second indication message is used to indicate a first air interface parameter configuration set, and the first air interface parameter configuration set is a set of air interface parameter configurations that can be used when the network device performs service data transmission; and the terminal device 800 further includes a sending module, configured to send a third indication message to the network device, where the third indication message is used to indicate a second air interface parameter configuration set, and the second air interface parameter configuration set is a set of air interface parameter configurations that can be used when the terminal device 800 performs service data transmission; and the second air interface parameter configuration is one in an intersection set of the first air interface parameter configuration set and the second air interface parameter configuration set.

Optionally, in an embodiment, the terminal device 800 further includes the sending module, configured to: before the receiving module 810 receives the first indication message sent by the network device, send a request message to the network device, where the request message is used to request the network device to send the first indication message to the terminal device 800.

Optionally, in an embodiment, the receiving module 810 is specifically configured to receive the first indication message sent by the network device in a multicast or broadcast manner.

Optionally, in an embodiment, the terminal device 800 further includes the sending module, configured to: before the transmission module 820 performs service data transmission with the network device by using the air interface resource with the second air interface parameter configuration, send an acknowledgement message to the network device, where the acknowledgement message is used to indicate that the terminal device 800 determines to use the air interface resource with the second air interface parameter configuration to perform service data transmission with the network device.

Optionally, in an embodiment, the second air interface parameter configuration includes at least one of a subcarrier spacing, a cyclic prefix CP length, a length of a transmission time interval TTI, a symbol length or a quantity of symbols in the TTI, and a frame format.

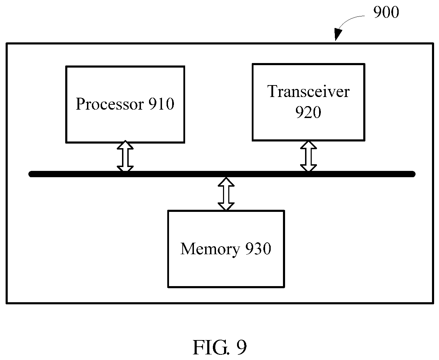

It should be noted that in this embodiment of the present invention, the receiving module 810, the transmission module 820, and the sending module may be implemented by a transceiver. As shown in FIG. 9, a terminal device 900 may include a processor 910, a transceiver 920, and a memory 930. The memory 930 may be configured to store code of a corresponding function performed by the transceiver 920 under control of the processor 910.

Components in the terminal device 900 communicate with each other by using an internal connection channel, to transfer a control signal and/or a data signal.

The terminal device 900 shown in FIG. 9 or the terminal device 800 shown in FIG. 8 can implement each process implemented in the foregoing method embodiments. To avoid repetition, details are not described herein again.

It should be noted that the foregoing each method embodiment of the present invention may be applied to a processor, or implemented by a processor. The processor may be an integrated circuit chip and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (Digital Signal Processor, DSP), an application-specific integrated circuit (application-specific integrated circuit, ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in the embodiments of the present invention. The general-purpose processor may be a microprocessor, or the processor may be any conventional processor or the like. Steps of the methods disclosed with reference to the embodiments of the present invention may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, and a register. The storage medium is located in the memory, and a processor reads information in the memory and completes the steps of the foregoing methods in combination with hardware of the processor.

It may be understood that the memory in the embodiments of the present invention may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

It should be understood that "first", "second", "third", "fourth", and various numbers in this specification are used merely for distinguishing for ease of description, and are not intended to limit the scope of the embodiments of the present invention.

It should be understood that in the embodiments of the present invention, "B corresponding to A" indicates that B is associated with A, and B may be determined based on A. However, it should be further understood that determining B based on A does not mean that B is determined based on A only; that is, B may alternatively be determined based on A and/or other information.

In addition, the terms "system" and "network" may often be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing described system, apparatus, and unit, reference may be made to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in the form of a software product. The computer software product is stored in a storage medium and includes one or more instructions for instructing a computer device (which may be a personal computer, a server, a network device, or the like) to perform all or some of the steps of the method described in the embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A service data transmission method, comprising:
sending, by a network device, a first indication message to a terminal device, wherein the first indication message is used to indicate a second air interface parameter configuration, and the first indication message is sent by using an air interface resource with a first air interface parameter configuration; and
performing, by the network device, service data transmission with the terminal device by using an air interface resource with the second air interface parameter configuration.

2. The method according to claim 1, wherein before the sending, by a network device, a first indication message to a terminal device, the method further comprises:
sending, by the network device, a second indication message to the terminal device, wherein the second indication message is used to indicate a first air interface parameter configuration set, and the first air interface parameter configuration set is a set of air interface parameter configurations that are available when the network device performs service data transmission; and
receiving, by the network device, a third indication message sent by the terminal device, wherein the third indication message is used to indicate a second air interface parameter configuration set, and the second air interface parameter configuration set is a set of air interface parameter configurations that are available when the terminal device performs service data transmission, wherein
the second air interface parameter configuration is one in an intersection set of the first air interface parameter configuration set and the second air interface parameter configuration set.

3. The method according to claim 1 or 2, wherein before the sending, by a network device, a first indication message to a terminal device, the method further comprises:
receiving, by the network device, a service data transmission indicator sent by a core network device; and
determining, by the network device, the second air interface parameter configuration based on the transmission indicator.

4. The method according to any one of claims 1 to 3, wherein before the sending, by a network device, a first indication message to a terminal device, the method further comprises:
receiving, by the network device, a request message sent by the terminal device, wherein the request message is used to request the network device to send the first indication message to the terminal device.

5. The method according to any one of claims 1 to 4, wherein the sending, by a network device, a first indication message to a terminal device comprises:
sending, by the network device, the first indication message to the terminal device in a multicast or broadcast manner.

6. The method according to any one of claims 1 to 5, wherein before the performing, by the network device, service data transmission with the terminal device by using the air interface resource with the second air interface parameter configuration, the method further comprises:
receiving, by the network device, an acknowledgement message sent by the terminal device, wherein the acknowledgement message is used to indicate that the terminal device determines to use the air interface resource with the second air interface parameter configuration to perform service data transmission with the network device.

7. The method according to any one of claims 1 to 6, wherein the second air interface parameter configuration comprises at least one of a subcarrier spacing, a cyclic prefix CP length, a length of a transmission time interval TTI, a symbol length or a quantity of symbols in the TTI, and a frame format.

8. A service data transmission method, comprising:
receiving, by a terminal device, a first indication message sent by a network device, wherein the first indication message is used to indicate a second air interface parameter configuration, and the first indication message is sent by using an air interface resource with a first air interface parameter configuration; and
performing, by the terminal device, service data transmission with the network device by using an air interface resource with the second air interface parameter configuration.

9. The method according to claim 8, wherein before the receiving, by a terminal device, a first indication message sent by a network device, the method further comprises:
receiving, by the terminal device, a second indication message sent by the network device, wherein the second indication message is used to indicate a first air interface parameter configuration set, and the first air interface parameter configuration set is a set of air interface parameter configurations that are available when the network device performs service data transmission; and
sending, by the terminal device, a third indication message to the network device, wherein the third indication message is used to indicate a second air interface parameter configuration set, and the second air interface parameter configuration set is a set of air interface parameter configurations that are available when the terminal device performs service data transmission, wherein
the second air interface parameter configuration is one in an intersection set of the first air interface parameter configuration set and the second air interface parameter configuration set.

10. The method according to claim 8 or 9, wherein before the receiving, by a terminal device, a first indication message sent by a network device, the method further comprises:
sending, by the terminal device, a request message to the network device, wherein the request message is used to request the network device to send the first indication message to the terminal device.

11. The method according to any one of claims 8 to 10, wherein the receiving, by a terminal device, a first indication message sent by a network device comprises:
receiving, by the terminal device, the first indication message sent by the network device in a multicast or broadcast manner.

12. The method according to any one of claims 8 to 11, wherein before the performing, by the terminal device, service data transmission with the network device by using the air interface resource with the second air interface parameter configuration, the method further comprises:
sending, by the terminal device, an acknowledgement message to the network device, wherein the acknowledgement message is used to indicate that the terminal device determines to use the air interface resource with the second air interface parameter configuration to perform service data transmission with the network device.

13. The method according to any one of claims 8 to 12, wherein the second air interface parameter configuration comprises at least one of a subcarrier spacing, a cyclic prefix CP length, a length of a transmission time interval TTI, a symbol length or a quantity of symbols in the TTI, and a frame format.

14. A network device, comprising:
a sending module, configured to send a first indication message to a terminal device, wherein the first indication message is used to indicate a second air interface parameter configuration, and the first indication message is sent by using an air interface resource with a first air interface parameter configuration; and
a transmission module, configured to perform service data transmission with the terminal device by using an air interface resource with the second air interface parameter configuration sent by the sending module.

15. The network device according to claim 14, wherein
the sending module is further configured to: before sending the first indication message to the terminal device, send a second indication message to the terminal device, wherein the second indication message is used to indicate a first air interface parameter configuration set, and the first air interface parameter configuration set is a set of air interface parameter configurations that are available when the network device performs service data transmission; and
the network device further comprises a receiving module, configured to receive a third indication message sent by the terminal device, wherein the third indication message is used to indicate a second air interface parameter configuration set, and the second air interface parameter configuration set is a set of air interface parameter configurations that are available when the terminal device performs service data transmission, wherein
the second air interface parameter configuration is one in an intersection set of the first air interface parameter configuration set and the second air interface parameter configuration set.

16. The network device according to claim 14 or 15, wherein the network device further comprises the receiving module, configured to: before the sending module sends the first indication message to the terminal device, receive a service data transmission indicator sent by a core network device; and
the network device further comprises a processing module, configured to determine the second air interface parameter configuration based on the transmission indicator.

17. The network device according to any one of claims 14 to 16, wherein the network device further comprises the receiving module, configured to: before the sending module sends the first indication message to the terminal device, receive a request message sent by the terminal device, wherein the request message is used to request the network device to send the first indication message to the terminal device.

18. The network device according to any one of claims 14 to 17, wherein the sending module is specifically configured to:
send the first indication message to the terminal device in a multicast or broadcast manner.

19. The network device according to any one of claims 14 to 18, wherein the network device further comprises the receiving module, configured to: before the transmission module performs service data transmission with the terminal device by using the air interface resource with the second air interface parameter configuration, receive an acknowledgement message sent by the terminal device, wherein the acknowledgement message is used to indicate that the terminal device determines to use the air interface resource with the second air interface parameter configuration to perform service data transmission with the network device.

20. The network device according to any one of claims 14 to 19, wherein the second air interface parameter configuration comprises at least one of a subcarrier spacing, a cyclic prefix CP length, a length of a transmission time interval TTI, a symbol length or a quantity of symbols in the TTI, and a frame format.

21. A terminal device, comprising:
a receiving module, configured to receive a first indication message sent by a network device, wherein the first indication message is used to indicate a second air interface parameter configuration, and the first indication message is sent by using an air interface resource with a first air interface parameter configuration; and
a transmission module, configured to perform service data transmission with the network device by using an air interface resource with the second air interface parameter configuration received by the receiving module.

22. The terminal device according to claim 21, wherein
the receiving module is further configured to: before receiving the first indication message sent by the network device, receive a second indication message sent by the network device, wherein the second indication message is used to indicate a first air interface parameter configuration set, and the first air interface parameter configuration set is a set of air interface parameter configurations that are available when the network device performs service data transmission; and
the terminal device further comprises a sending module, configured to send a third indication message to the network device, wherein the third indication message is used to indicate a second air interface parameter configuration set, and the second air interface parameter configuration set is a set of air interface parameter configurations that are available when the terminal device performs service data transmission, wherein
the second air interface parameter configuration is one in an intersection set of the first air interface parameter configuration set and the second air interface parameter configuration set.

23. The terminal device according to claim 21 or 22, wherein the terminal device further comprises the sending module, configured to: before the receiving module receives the first indication message sent by the network device, send a request message to the network device, wherein the request message is used to request the network device to send the first indication message to the terminal device.

24. The terminal device according to any one of claims 21 to 23, wherein the receiving module is specifically configured to:
receive the first indication message sent by the network device in a multicast or broadcast manner.

25. The terminal device according to any one of claims 21 to 24, wherein the terminal device further comprises the sending module, configured to: before the transmission module performs service data transmission with the network device by using the air interface resource with the second air interface parameter configuration, send an acknowledgement message to the network device, wherein the acknowledgement message is used to indicate that the terminal device determines to use the air interface resource with the second air interface parameter configuration to perform service data transmission with the network device.

26. The terminal device according to any one of claims 21 to 25, wherein the second air interface parameter configuration comprises at least one of a subcarrier spacing, a cyclic prefix CP length, a length of a transmission time interval TTI, a symbol length or a quantity of symbols in the TTI, and a frame format.
